# EUROPÄISCHE PATENTSCHRIFT

(11) **EP 2 129 544 B1**
(45) Veröffentlichungstag und Bekanntmachung des Hinweises auf die Patenterteilung: **07.11.2012**
(21) Anmeldenummer: 08715977.8
(22) Anmeldetag: 22.02.2008
(51) Int. Cl.: B60N 2/225

(54) **VERSTELLBESCHLAG FÜR EINE KRAFTFAHRZEUGKOMPONENTE**
ADJUSTMENT FITTING FOR A MOTOR VEHICLE COMPONENT
ACCESSOIRE D'AJUSTEMENT POUR ÉLÉMENT DE VÉHICULE À MOTEUR

(30) Priorität: 28.02.2007 DE 102007010078
(43) Veröffentlichungstag der Anmeldung: 09.12.2009
(73) Patentinhaber: Johnson Controls GmbH, 51399 Burscheid (DE)
(72) Erfinder: KIRUBAHARAN, Albert, Reginold, 51399 Burscheid (DE)
(74) Vertreter: Wolff, Felix
(86) Internationale Anmeldenummer: PCT/EP2008/001426
(87) Internationale Veröffentlichungsnummer: WO 2008/104334

(56) Entgegenhaltungen:
- DE-A1-102004 039 538
- DE-C1- 19 548 809

## Beschreibung

Die vorliegende Erfindung betrifft einen Verstellbeschlag für eine Kraftfahrzeugkomportente. insbesondere einen Fahrzeugsitz, mit einem ersten Beschlagteil und mit einem hierzu mittels eines Getriebes um eine Drehachse drehverstellbar vorgesehenen zweiten Beschlagteil, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil umfasst, wobei zwei Keitsegmente zur Sicherstellung der exzentrischen Anordnung der ersten Verzahnung relativ zur zweiten Verzahnung vorgesehen sind.

Solche Verstellbeschläge sind allgemein bekannt. Beispielsweise ist aus der deutschen Patentschrift DE 195 48 809 C1 eine Ver- und Feststelleinrichtung für Sitze, wie Kraftfahrzeugsitze, zur Verstellung der Rückenlehne gegenüber dem Sitzteil bekannt Hierbei wird zur Verhinderung des Ablaufens des mit der Rückenlehne verbundenen Beschlagteils während eines durch Rütteln und Stoßen gekennzeichneten Zeitraums unter dynamischen Betriebsbedingungen ein Sperrung in der radialen Ebene zwischen den Kellsegmenten und dem Mitnehmer angeordnet, wobei der Sperning an einem Außenumfang wenigstens eine in die Gegenverzahnung des festen Beschlagteils eingreifbare Spermase aufweist. Die Feststelleinrichtung weist ein Bremselement auf, wobei das Bremselement alternativ in einer Freigabestellung oder in einer Blockierstellung einstellbar ist. Hieran ist nachteilig, dass ein Totgang zur Lösung der Spermase vorhanden ist und dass ein dauerhafter Eingriff der Spermase in die Gegenverzahnung des festen Beschlagteils vorhanden ist, der einerseits eine ungewolite Geräuschentwicklung und andererseits einen zusätzliche Kraftaufwand zur Verstellung des Beschlags bewirkt.

Aufgabe der vorliegenden Erfindung ist es daher, einen Verstellbeschlag für eine Kraftfahrzeugkomponente, insbesondere einen Fahrzeugsitz, anzugeben, wobei der Verstellbeschlag einen ersten Beschlagteil und einen zweiten Beschlagteil aufweist, wobei der zweite Beschlagteil mittels eines Getriebes um eine Drehachse relativ zum ersten Beschlagteil drehverstellbar vorgesehen ist, wobei zum einen der Verstellbeschlag relativ leichlgänge ist sowie eine geringe Geräuschentwicklung aufweist, einfach und damit kostengünstig herstellbar ist und darüber hinaus gegen Ablaufen gerichtet ist.

Diese Aufgabe wird mit einem Verstellbeschlag gelöst, wobei der Verstellbeschlag einen ersten Beschlagteil und einen zweiten Beschlagteil aufweist, wobei der zweite Beschlagteil mittels eines Getriebes um eine Drehachse relativ zum ersten Beschlagteil drehverstellbar vorgesehen ist, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil aufweist, wobei zwei Keilsegmente zur Sicherstellung der exzentrischen Anordnung der ersten Verzahnung relativ zur zweiten Verzahnung vorgesehen sind, wobei die Keilsegmente radial außenseitig in einer eine Buchsenverzahnung aufweisenden Gleitbuchse gelagert sind, wobei der Verstellbeschlag ein Bremselement aufweist, wobei das Bremselement alternativ in einer Freigabestellung oder in einer Blockierstellung einstellbar ist, wobei das Bremselement in der Freigabestellung innerhalb des Radius der Gleitbuchse angeordnet ist und wobei das Bremselement in der Blockierstellung in die Buchsenverzahnung eingreift. Hierdurch kann das Bremselement besonders bauraumkompakt und klein ausgeführt werden, so dass der Verstellbeschlag insgesamt sehr bauraumkompakt und damit kostengünstig hergestellt werden kann. Im Rahmen der vorliegenden Erfindung - insbesondere hinsichtlich der Ausführungsbeispiele - ist die Buchsenverzahnung als eine mit der Gleitbuchse verbundene Verzahnung vorgesehen. Es ist jedoch alternativ hierzu auch möglich, dass die Buchsenverzahnung als von der Gleitbuchse separate Verzahnung vorgesehen ist. Im Folgenden wird jedoch für diesen Fall von einer Buchsenverzahnung gesprochen.

Gemäß einer bevorzugten Ausführungsform des Verstellbeschlags ist es weiterhin vorgesehen, dass das Bremselement ein Blockierelement umfasst, wobei in der Blockierstellung das Blockierelement in die Buchsenverzahnung radial zur Drehachse eingreifend vorgesehen ist. Hierdurch ist es erfindungsgemäß vorteilhaft möglich, dass ohne eine Beeinträchtigung der Funktion der Verzahnungen eine Blockierung der Beschlagteile gegeneinander durch das Bremselement in einfacher und kostengünstiger Weise möglich ist.

Bevorzugt ist es gemäß der vorliegenden Erfindung ferner vorgesehen, dass das Blockierelement und die Buchsenverzahnung derart vorgesehen sind, dass eine Anzahl von Blockierstellungen vorgegeben ist, wobei die Anzahl von Blocklerstellungen kleiner ist als die Zähnezahl sowohl der ersten Verzahnung als auch der zweiten Verzahnung. Dies hat den Vorteil, dass das Blockierelement - bei ansonsten gleichen Bedingungen, wie etwa der Benutzung des gleichen Materials des Blockierelements etc. - vergleichsweise groß und belastbar ausgeführt werden kann.

Erfindungsgemäß ist es ferner bevorzugt, dass das Bremselement ein Federelement aufweist, wobei das Federelement das Bremselement in die Freigabestellung einstellt. Hierdurch ist es erfindungsgemäß möglich, dass beim Normalbetrieb des Versteilbeschlags keine zusätzliche Reibung und kein Geräusch durch das Bremselement entsteht.

Weiterhin ist es erfindungsgemäß bevorzugt, dass das Bremselement ein geschlossenes Teilelement aufweist, wobei das Bremselement gegenüber dem geschlossenen Teilelement kippbar vorgesehen ist. Hierdurch ist es erfindungsgemäß besonders vorteilhaft möglich, dass das Bremselement in einfacher und dennoch sicherer Weise bewegt wird und damit seine Funktion erfüllt.

Gemäß einer weiteren bevorzugten Ausführungsform der vorliegenden Erfindung ist es bei einem Verstellbeschlag vorgesehen, dass das geschlossene Teilelement die Antriebswelle des Verstellbeschlags umschließt. Hierdurch kann in einfacher Weise die Funktionalität des Bremselements verbessert werden. Alternativ kann das geschlossene Teilelement auch derart ausgebildet sein, dass die Antriebswelle nicht vollständig umschlossen wird; dennoch wird im Folgenden von einem geschlossenen Teilelement gesprochen.

Weiterhin wird ein Verfahren zur Sicherung der Arretierung eines Versteilbeschlags für eine Kraftfahrzeugkomponente, insbesondere einen Fahrzeugsitz, offenbart, wobei der Verstellbeschlag einen ersten Beschlagteil und einen hierzu mittels eines Getriebes um eine Drehachse drehverstellbar vorgesehenen zweiten Beschlagteil ausweist, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil umfasst, wobei zwei Keilsegmente zur Sicherstellung der exzentrischen Anordnung der ersten Verzahnung relativ zur zweiten Verzahnung vorgesehen sind und wobei ein Bremselement vorgesehen ist, wobei das Bremselement bei einer Einstellung in seine Blockierstellung gegenüber dem geschlossenen Teilelement verkippt wird.

Ausführungsbeispiele der Erfindung sind in den Zeichnungen dargestellt und in der nachfolgenden Beschreibung näher erläutert.

Die Figuren 1 und 2 zeigen in zwei unterschiedlich vergrößerten Darstellungen einen erfindungsgemäßen Verstellbeschlag in zusammengebauter Form.

Figur 3 zeigt eine Explosionsdarstellung eines Teils des Verstellbeschlags.

**Figuren 4 bis 6** zeigen verschiedene Ansichten eines Bremselements in unterschiedlichen Betriebspositionen.

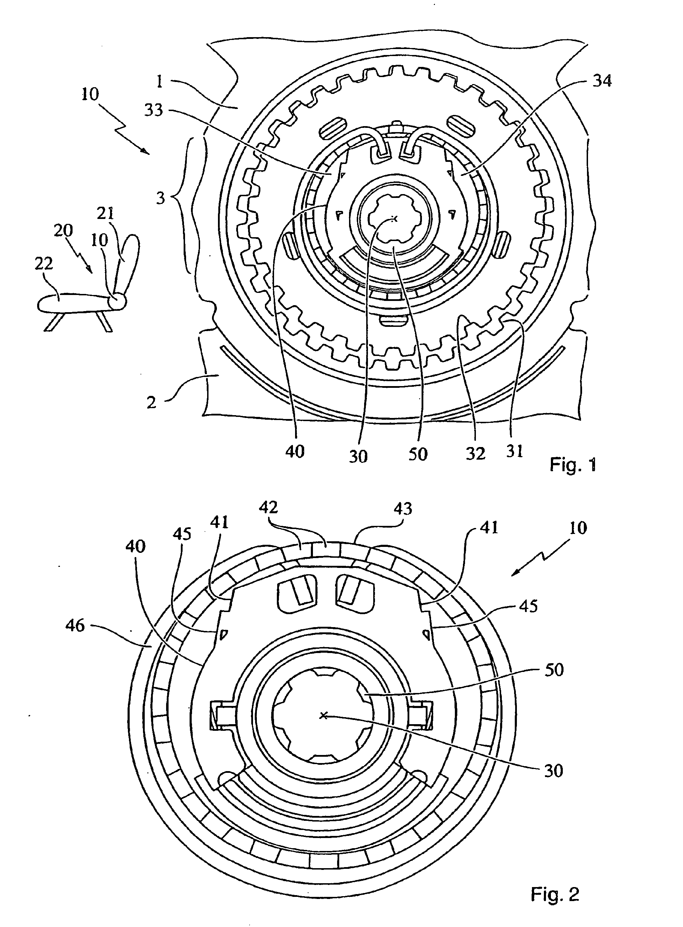

In **Figur 1 und 2** ist in zwei unterschiedlich vergrößerten Darstellungen ein erfindungsgemäßer Verstellbeschlag 10 dargestellt. Der Verstellbeschlag 10 verbindet ein erstes Beschlagteil 1 mit einem zweiten Beschlagteil 2. Die Beschlagteile sind durch eine Drehung eines Antriebselements 50 um eine Drehachse 30 gegeneinander drehverstellbar vorgesehen, insbesondere mit einer großen Übersetzung von beispielsweise 1:20 bis 1:50, bevorzugt 1:30 bis 1:40. Hierdurch ist es erfindungsgemäß möglich, dass der Verstellbeschlag 10 zur Anbindung verschiedener drehbeweglich zueinander vorgesehener Teile einer Kraftfahrzeugkomponente verwendbar ist und vorzugsweise stufenlos einstellbar ist. Eine solche Kraftfahrzeugkomponente 20 ist schematisch im linken Teil der Figur 1 am Beispiel eines Kraftfahrzeugsitzes 20 dargestellt. Ein solcher Sitz 20 bzw. eine solche Kraftfahrzeugkomponente 20 weist beispielsweise ein Lehnenteil 21 und ein Sitzteil 22 auf, welche über einen erfindungsgemäßen Verstellbeschlag 10 miteinander drehverstellbar verbunden vorgesehen sind.

Die Drehverstellbarkeit wird erfindungsgemäß innerhalb des Verstellbeschlags 10 durch ein Getriebe 3 gewährleistet, wobei das Getriebe 3 eine erste Verzahnung 31 am ersten Beschlagteil 1 und eine zweite Verzahnung 32 am zweiten Beschlagteil 2 und darüber hinaus ein erstes Keilelement 33 und ein zweites Keilelement 34 aufweist. Das Getriebe 3 ist erfindungsgemäß durch Reibschluss selbsthemmend ausgebildet und besonders bevorzugt als ein sogenanntes Taumelgetriebe ausgebildet. Es kann jedoch bei wiederholt und über einen längeren Zeitraum auftretenden Kraftstößen zwischen den Beschlagteilen 1, 2 (bzw. bei auftretenden Drehmomenten) vorkommen, dass das erste Beschlagteil 1 gegenüber dem zweiten Beschlagteil 2 abläuft, d. h. dass eine zwar kleine, jedoch über eine längere Zeitdauer kontinuierlich in dieselbe Richtung auftretende Verstellung der Beschlagteile 1, 2 zueinander vorkommt. Dies ist besonders dann kritisch, wenn es sich bei dem Verstellbeschlag um einen Beschlag an einem Kraftfahrzeugsitz handelt und an der Rückenlehne 21 immer Momente bzw. Kräfte in im Wesentlichen die gleiche Richtung anliegen, so dass auf Dauer eine Verstellung des Versteilbeschlags auftritt, wenn keine geeigneten Gegenmaßnahmen ergriffen werden. Um eine solche Verstellung zu verhindern, ist erfindungsgemäß das Bremselement 40 vorgesehen.

Aus insbesondere der Figur 1 ist ersichtlich, dass die Drehachse 30 den Mittelpunkt bzw. die Mittelachse des Antriebselements 50 darstellt. Exzentrisch zur Mittelachse 30 ist die zweite Verzahnung 32 und damit das zweite Beschlagteil 2 angeordnet. Diese Exzentrizität wird dadurch erzielt, dass zwischen dem Antriebselement 50 und dem zweiten Beschlagteil 2 bzw. der zweiten Verzahnung 32 ein Exzenterabschnitt als Teil des Getriebes 3 angeordnet ist, welcher das erste Keilelement 33 bzw. das erste Keilsegment 33 und das zweite Keilelement 34 bzw. das zweite Keilsegment 34 umfasst. Die Keilsegmente 33, 34 werden durch eine in der Figur 1 und in der Figur 2 dargestellte weitere Feder 46 (bzw. weiteres Federelement 46) an ihren in Figur 1 im oberen Bereich der Figur angeordneten und sich gegenüberliegenden Breitseiten derart auseinandergedrückt, dass die Exzentrizität der zweiten Verzahnung 32 relativ zur Drehachse 30 maximal wird. Dies führt dazu, dass an einer Stelle des Umfangs der zweiten Verzahnung 32 dieselbe mit der ersten Verzahnung 31 kämmt. Dies ist in der in Figur 1 dargestellten Situation im oberen Bereich der zweiten Verzahnung 32 bzw. auch der ersten Verzahnung 31 der Fall. Die Keilsegmente 33, 34 sind außenseitig bzw. radial außen in einer Gleitbuchse 43 gelagert, die eine Buchsenverzahnung 42 aufweist. Das Bremselement 40 weist nun ein Blockierelement 41 auf, das in die Buchsenverzahnung 42 eingreifen kann bzw. mit der Buchsenverzahnung im Sinne einer Blockierung des Verstellbeschlags 10 zusammenwirken kann.

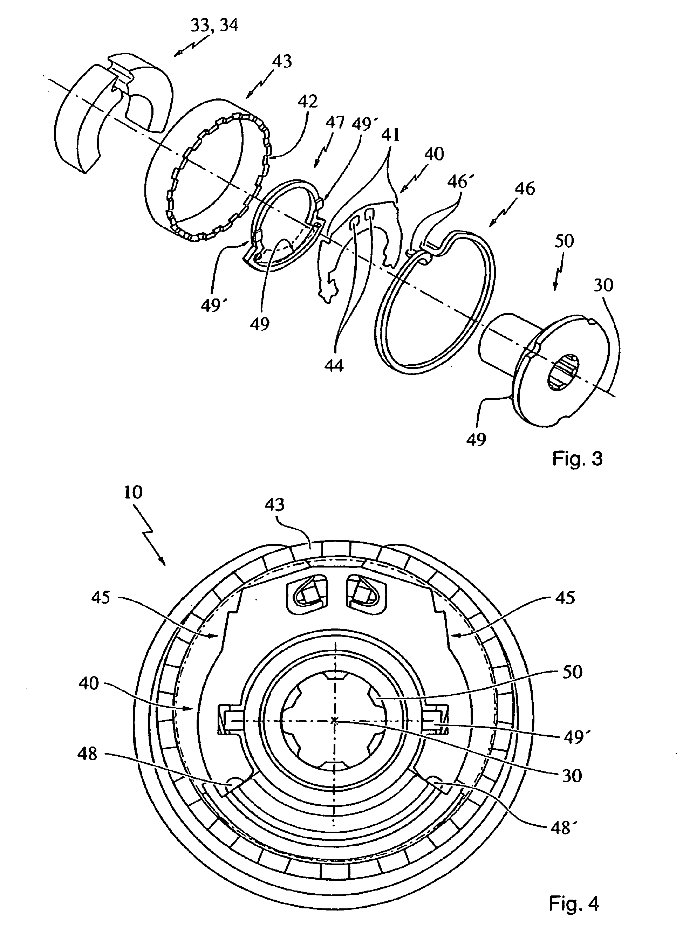

Aus Figur 3 geht eine Explosionsdarstellung der wesentlichen Teile des Verstellbeschlags 10 hervor. Ein Antriebselement 50 weist eine keilwellenförmige Ausnehmung in seiner Mitte auf. Durch das Antriebselement 50 verläuft die Drehachse 30 (in Figur 3 im Wesentlichen mit der Explosionsachse zusammenfallend). Das Antriebselement 50 weist einen in den Figuren nicht dargestellten Mitnehmer auf. Mittels des Mitnehmers werden die Keilsegmente 33, 34 bei einer Drehung des Antriebselementes 50 um die Drehachse 30 in die eine oder andere Drehrichtung bewegt. Hierbei wird die Exzentereinstellung der ersten Verzahnung 31 gegenüber der zweiten Verzahnung 32 verringert. Gleichzeitig wird über die Verbindung des Antriebselementes 50 mit dem Bremselement 40 bzw. mit einem geschlossenen Teilelement 47 des Bremselements 40 auch das Bremselement 40 gedreht. Das geschlossene Teilelement 47 ist hierbei als separates Teil mit dem Außenumfang des Antriebselements 50 drehfest über ein Formschlusselement 49 verbunden, wobei das Formschlusselement 49 im Ausführungsbeispiel beispielhaft (jedoch nicht zwingend) einstückig mit dem Antriebselement 50 verbunden ist. Ein Vorsprung 49' ist im mittleren Bereich des geschlossenen Teilelements 47 beispielhaft derart angeordnet, dass das Bremselement 40 zwar eine gewisse Drehbeweglichkeit gegenüber dem geschlossenen Teilelement 47 aufweist, jedoch grundsätzlich auch zusammen mit dem Antriebselement 50 und dem geschlossenen Teilelement 47 (dreh)bewegt wird. Das Bremselement 40 weist beidseitig sich am geschlossenen Teilelement 47 abstützende Federelemente 45 auf, die im dargestellten Ausführungsbeispiel als Blattfedern bzw. in der Art von Blattfedern ausgebildet sind. Das Bremselement 40 weist ferner zwei Ausnehmungen 44 auf, die zusammen mit dem weiteren Federelement 46, dessen Enden 46' in einer bevorzugten Ausführungsform des erfindungsgemäßen Verstellbeschlags 10 durch die Ausnehmungen 44 hindurchragen, eine Verkippungsbewegung des Bremselements 40 bewirken können. Ferner sind aus der Explosionsdarstellung der Figur 3 die Keilelemente 33, 34, die Gleitbuchse 43, die Buchsenverzahnung 42 und das Blockierelement 41 ersichtlich.

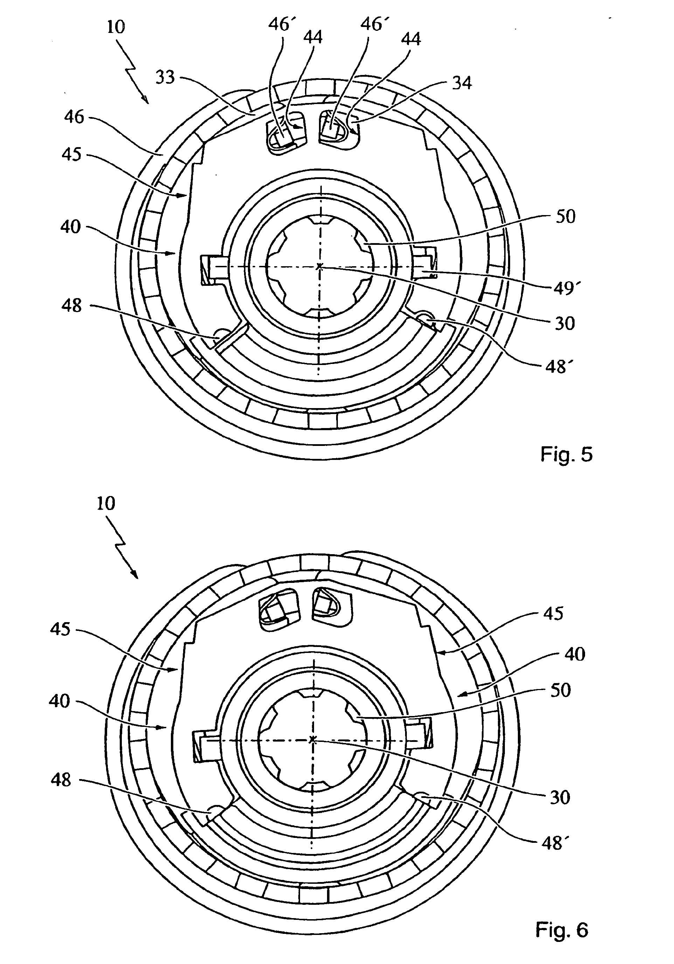

Die Funktionsweise des Verstellbeschlags 10 ist schematisch anhand der Figuren 4 bis 6 nachfolgend dargestellt: In Figur 4 ist das Bremselement 40 in seiner Freigabestellung eingestellt dargestellt. In dieser Freigabestellung ist das Bremselement 40 aufgrund der Federkraft des Federelements 45 derart eingestellt, dass es vollständig innerhalb des Radius der Gleitbuchse 43 angeordnet ist. Dies ist in Figur 4 mittels einer punktgestrichelten Linie dargestellt, die entlang eines gegenüber dem Innenradius der Gleitbuchse 43 etwas verminderten und entlang eines gegenüber dem Außenradius des Bremselements 40 etwas vergrößerten Radius verläuft. Hierdurch wird zum Ausdruck gebracht, dass in der dargestellten Freigabestellung - d.h. sowohl während der Einstellung bzw. Verstellung des Verstellbeschlags 10 als auch während einer festen Einstellung des Verstellbeschlags 10 (aufgrund allein der selbsthemmenden Wirkung des Getriebes 3 und ohne Aktivierung des Bremselements 40) - ein radialer Abstand bzw. eine Nichtberührung zwischen dem Bremselement 40 und der Gleitbuchse 43 vorliegt. Die Ausübung eines Drehmomentes zwischen dem ersten und zweiten Beschlagteil 1, 2 führt nun dazu, dass das rechte Keilelement 34 geringfügig (nach links) bewegt wird (vgl. Figur 5), was dazu führt, dass mittels des weiteren Federelements 46 und/oder mittels des linken Keilelements 33 eine Verschiebung bzw. eine Verkippung des Bremselements 40 nach links um die mit dem Bezugszeichen 48 bezeichnete linke Kippstelle erfolgt. Diese Verkippung des Bremselements 40 um die linke Kippstelle 48 (bzw. um eine rechte Kippstelle 48' im Falle einer Bewegung des linken Keilelements 33 nach rechts) wird erfindungsgemäß beispielsweise dadurch bewirkt, dass eines der Enden 46' des weiteren Federelements 46 aufgrund der besagten Bewegung wenigstens eines der Keilelemente 33, 34 bewegt wird und in zumindest einem Teilbereich dieser Bewegung (von einem der Enden 46' des weiteren Federelements 46) dieses Ende 46' des weiteren Federelements 46 im Bereich einer Ausnehmung 44 des Bremselements 40 in Kontakt mit dem Bremselement 40 ist und hierbei das Bremselement 40 verkippt. Die Übertragung der Bewegung der Keilelemente 33, 34 auf das Bremselement 40 kann gemäß der vorliegenden Erfindung jedoch auch in einer anderen Weise als durch ein Hindurchtreten von Enden 46' des weiteren Federelements 46 durch Ausnehmungen 44 des Bremselements 40 bewirkt werden, beispielsweise durch Nuten bzw. Nasen bzw. sonstige Formschlusselemente zwischen den Keilelementen 33, 34 und dem Bremselement 40. In der gekippten Einstellung ist das Bremselement 40 in seiner Blockierstellung eingestellt und sperrt den Verstellbeschlag 10 gegen ein weiteres Ablaufen aufgrund des anliegenden Drehmomentes. Wird in der in der Figur 5 dargestellten Situation bzw. Einstellung des Bremselements 40 das Antriebselement 50 bewegt, kommt es wieder zu einer Zurückstellung des Bremselements 40 in seine Normalposition bzw. in seine Freigabestellung. Dies erfolgt aufgrund der Federwirkung des Federelements 45 und aufgrund eines Formschlusses gegen eine Verdrehung zwischen dem geschlossenen Teilelement 47 des Bremselements 40 und dem Antriebselement 50. Dieser Formschluss wird mittels eines in Figur 3 mittels einer gestrichelten Linie angedeuteten Formschlusselements 49 realisiert, wobei das Formschlusselement 49 beispielsweise ringsegmentartig ausgebildet ist und mit dem Antriebselement 50 einstückig verbunden ist, was in Figur 3 andeutungsweise im Bereich des Antriebselements 50 dargestellt ist. In diesem Fall greift beispielsweise das Formschlusselement 49 in eine entsprechend geformte Ausnehmung (vgl. die gestrichelte Linie in Figur 3) im Bereich des geschlossenen Teilelements 47. Die Freigabestellung des Bremselements 40 ist wieder in Figur 6 dargestellt.

Eine Drehung des Antriebselements 50 bewirkt eine Taumelbewegung des ersten Beschlagteils 1 und damit der ersten Verzahnung 31 um das zweite Beschlagteil 2 bzw. die zweite Verzahnung 32. Die erste Verzahnung 31 weist hierbei wenigstens einen Zahn mehr auf als die zweite Verzahnung 32, so dass es zu einer Drehverstellung des ersten Beschlagteils 1 relativ zum zweiten Beschlagteil 2 kommt. Wenn die Drehbewegung um die Drehachse 30 des Antriebselementes 50 beendet ist, ist das Bremselement 40 in seiner Freigabestellung eingestellt. Durch das Auseinanderdrücken der Keilsegmente 33. 34 mittels des weiteren Federelements 46 wird eine Arretierung des Verstellbeschlags 10 erreicht. Sollte diese Arretierung, insbesondere bei wechselnden Lasten bzw. Vibrationen oder Rüttelbewegungen, nicht ausreichend sein, so findet eine geringfügige Verstellung des Verstellbeschlags 10 derart statt, dass das Blockierelement 41 durch Verdrehung bzw. Verkippung des Bremselements 40 zwischen zwei Vorsprünge der Buchsenverzahnung 42 eingreift und damit eine Blockierung zwischen dem ersten und zweiten Beschlagteil 1, 2 erzielt wird. Ein weiterer Ablauf des Verstellbeschlags 10 ist dann nicht mehr möglich. Dieser geringfügige Ablauf des Verstellbeschlags 10 ist erfindungsgemäß aufgrund der großen Übersetzung für einen Benutzer der Kraftfahrzeugkomponente 20 nicht erkennbar und verbleibt bevorzugt im Bereich unterhalb von einem Grad (1°).

### Bezugszeichenliste:

- 1: erstes Beschlagteil
- 2: zweites Beschlagteil
- 3: Getriebe
- 10: Verstellbeschlag
- 20: Kraftfahrzeugkomponente
- 21: Lehnenteil
- 22: Sitzteil
- 30: Drehachse
- 31: erste Verzahnung
- 32: zweite Verzahnung
- 33: erstes Keilsegment
- 34: zweites Keilsegment
- 40: Bremselement
- 41: Blockierelement
- 42: Buchsenverzahnung
- 43: Gleitbuchse
- 44: Ausnehmungen im Bremselement
- 45: Federelement
- 46: weiteres Federelement
- 46': Ende des weiteren Federelements
- 47: geschlossenes Teilelement
- 48: linke Kippstelle
- 48': rechte Kippstelle
- 49: Formschlusselement
- 49': Vorsprung
- 50: Antriebselement

## Patentansprüche

1. Verstellbeschlag (10) für eine Kraftfahrzeugkomponente (20), Insbesondere einen Fahrzeugsitz, mit einem ersten Beschlagteil (1) und mit einem hierzu mittels eines Getriebes (3) um eine Drehachse (30) drehverstellbar vorgesehenen zweiten Beschlagteil (2), wobei das Getriebe (3) eine erste Verzahnung (31) am ersten Beschlagteil (1) umfasst und wobei das Getriebe (3) eine exzentrisch zur ersten Verzahnung (31) angeordnete zweite Verzahnung (32) am zweiten Beschlagteil (2) umfasst, wobei zwei Keilsegmente (33, 34) zur Sicherstellung der exzentrischen Anordnung der ersten Verzahnung (31) relativ zur zweiten Verzahnung (32) vorgesehen sind, wobei der Verstellbeschlag (10) ein Bremselement (40) aufweist, wobei das Bremselement (40) alternativ in einer Freigabestellung oder in einer Blockierstellung einstellbar ist, **dadurch gekennzeichnet, dass** die Keilsegmente (33, 34) radial außenseitig in einer eine Buchsenverzahnung (42) aufweisenden Gleitbuchse (43) gelagert sind, wobei das Bremselement (40) in der Freigabestellung innerhalb des Radius der Gleitbuchse (43) angeordnet ist und wobei das Bremselement (40) in der Blockierstellung In die Buchsenverzahnung (42) eingreift.

2. Verstellbeschlag (10) nach Anspruch 1, **dadurch gekennzeichnet, dass** das Bremselement (40) ein Blockierelement (41) umfasst, wobei in der Blockierstellung das Blockierelement (41) in die Buchsenverzahnung (42) radial zur Drehachse (30) eingreifend vorgesehen ist.

3. Verstellbeschlag (10) nach Anspruch 2, **dadurch gekennzeichnet, dass** das Blockierelement (41) und die Buchsenverzahnung (42) derart vorgesehen sind, dass eine Anzahl von Blockierstellungen vorgegeben ist, wobei die Anzahl von Blockierstellungen kleiner ist als die Zähnezahl sowohl der ersten Verzahnung (31) als auch der zweiten Verzahnung (32).

4. Versteilbeschlag (10) nach einem der vorhergehenden Ansprüche, **dadurch gekennzeichnet, dass** das Bremselement (40) ein Federelement (45) aufweist, wobei das Federelement (45) das Bremselement (40) in die Freigabestellung einstellt.

5. Verstellbeschlag (10) nach einem der vorhergehenden Ansprüche, **dadurch gekennzeichnet, dass** das Bremselement (40) ein geschlossenes Teilelement (47) aufweist, wobei das Bremselement (40) gegenüber dem geschlossenen Teilelement (47) kippbar vorgesehen ist, insbesondere um eine Kippstelle (48. 48').

6. Versteilbeschlag (10) nach einem der vorhergehenden Ansprüche, **dadurch gekennzeichnet, dass** das geschlossene Teilelement (47) die Antriebswelle des Verstellbeschlags (10) umschliesst.

7. Verstellbeschlag (10) nach einem der vorhergehenden Ansprüche, **dadurch gekennzeichnet, dass** das geschlossene Teilelement (47) zu der Antriebswelle des Verstellbeschlags (10) mittels eines Formschlusselements (49) drehfest vorgesehen ist.

## Claims

1. Adjustment fitting (10) for a motor vehicle component (20), particularly a vehicle seat, having a first fitting part (1) and a second fitting part (2) provided to be rotatably adjustable about a rotary axis (30) relative to the first fitting part by means of a gear drive (3), the gear drive (3) comprising a first gearing (31) on the first fitting part (1) and the gear drive (3) comprising a second gearing (32) on the second fitting part (2) arranged eccentrically to the first gearing (31), two wedge segments (33, 34) being provided for securing the eccentric arrangement of the first gearing (31) relative to the second gearing (32), the adjustment fitting (10) having a braking element (40), the braking element (40) being able to be set alternately in a release position or in a locked position, **characterized in that** the wedge segments (33, 34) are mounted radially outward in a sliding bushing (43) having bushing gear teeth (42), the braking element (40) in the release position being arranged inside the radius of the sliding bushing (43) and the braking element (40) engaging the bushing gear teeth (42) in the locked position.

2. Adjustment fitting (10) according to Claim 1, **characterized in that** the braking element (40) comprises a locking element (41), in the locked position the locking element (41) being provided engaging in the bushing gear teeth (42) radially to the rotary axis (30).

3. Adjustment fitting (10) according to Claim 2, **characterized in that** the locking element (41) and the bushing gear teeth (42) are provided such that a number of locked positions are predetermined, the number of locked positions being smaller than the number of teeth both of the first gearing (31) and of the second gearing (32).

4. Adjustment fitting (10) according to one of the preceding claims, **characterized in that** the braking element (40) has a spring element (45), the spring element (45) setting the braking element (40) in the release position.

5. Adjustment fitting (10) according to one of the preceding claims, **characterized in that** the braking element (40) has a closed partial element (47), the braking element (40) being provided to be tiltable relative to the closed partial element (47), in particular about a tilted position (48, 48').

6. Adjustment fitting (10) according to one of the preceding claims, **characterized in that** the closed partial element (47) encloses the drive shaft of the adjustment fitting (10).

7. Adjustment fitting (10) according to one of the preceding claims, **characterized in that** the closed partial element (47) is provided fixed in terms of rotation to the drive shaft of the adjustment fitting (10) by means of a positive connection element (49).

## Revendications

1. Accessoire de réglage (10) pour un composant de véhicule automobile (20), en particulier un siège de véhicule, comprenant une première partie d'accessoire (1) et une deuxième partie d'accessoire (2) prévue à cet effet de manière réglable par rotation autour d'un axe de rotation (30) au moyen d'un mécanisme (3), le mécanisme (3) comprenant une première denture (31) sur la première partie d'accessoire (1) et le mécanisme (3) comprenant une deuxième denture (32) sur la deuxième partie d'accessoire (2), disposée de manière excentrée par rapport à la première denture (31), deux segments de clavette (33, 34) étant prévus pour assurer la disposition excentrique de la première denture (31) par rapport à la deuxième denture (32), l'accessoire de réglage (10) présentant un élément de freinage (40), l'élément de freinage (40) pouvant être ajusté au choix dans une position de libération ou dans une position de blocage, **caractérisé en ce que** les segments de clavette (33, 34) sont montés radialement du côté extérieur dans un manchon coulissant (43) présentant une denture de manchon (42), l'élément de freinage (40) étant disposé dans la position de libération à l'intérieur du rayon du manchon coulissant (43) et l'élément de freinage (40) venant en prise dans la position de blocage dans la denture de manchon (42).

2. Accessoire de réglage (10) selon la revendication 1, **caractérisé en ce que** l'élément de freinage (40) comprend un élément de blocage (41), l'élément de blocage (41) étant prévu dans la position de blocage pour venir en prise dans la denture de manchon (42) radialement par rapport à l'axe de rotation (30).

3. Accessoire de réglage (10) selon la revendication 2, **caractérisé en ce que** l'élément de blocage (41) et la denture de manchon (42) sont prévus de telle sorte qu'une pluralité de positions de blocage soient prédéfinies, la pluralité de positions de blocage étant inférieure au nombre des dents de la première denture (31) ainsi que de la deuxième denture (32).

4. Accessoire de réglage (10) selon l'une quelconque des revendications précédentes, **caractérisé en ce que** l'élément de freinage (40) présente un élément de ressort (45), l'élément de ressort (45) ajustant l'élément de freinage (40) dans la position de libération.

5. Accessoire de réglage (10) selon l'une quelconque des revendications précédentes, **caractérisé en ce que** l'élément de freinage (40) présente un élément partiel fermé (47), l'élément de freinage (40) étant prévu de manière à pouvoir basculer par rapport à l'élément partiel fermé (47), notamment autour d'un point de basculement (48, 48').

6. Accessoire de réglage (10) selon l'une quelconque des revendications précédentes, **caractérisé en ce que** l'élément partiel fermé (47) entoure l'arbre d'entraînement de l'accessoire de réglage (10).

7. Accessoire de réglage (10) selon l'une quelconque des revendications précédentes, **caractérisé en ce que** l'élément partiel fermé (47) est prévu de manière à être solidaire en rotation avec l'arbre d'entraînement de l'accessoire de réglage (10) au moyen d'un élément d'engagement par coopération de forme (49).
